# EUROPEAN PATENT APPLICATION

(11) **EP 4 632 665 A1**
(43) Date of publication of application: **15.10.2025**
(21) Application number: 23899802.5
(22) Date of filing: 24.11.2023
(51) Int. Cl.: G06T 5/00

(54) **IMAGE PROCESSING METHOD AND APPARATUS, AND DEVICE, STORAGE MEDIUM AND COMPUTER PROGRAM PRODUCT**

(30) Priority: 09.12.2022 CN 202211584120
(71) Applicant: Beijing Zitiao Network Technology Co., Ltd., Beijing 100190 (CN)
(72) Inventor: WEI, Zhixuan, Beijing 100028 (CN); LIU, Bo, Beijing 100028 (CN); ZHANG, Xinghua, Beijing 100028 (CN); CHEN, Tianqi, Beijing 100028 (CN); ZHU, Ximin, Beijing 100028 (CN); DENG, Runming, Beijing 100028 (CN); CHEN, Zhi, Beijing 100028 (CN)
(74) Representative: Marks & Clerk LLP
(86) International application number: PCT/CN2023/134015
(87) International publication number: WO 2024/120223

(57) **Abstract**

Provided in the embodiments of the present disclosure are an image processing method and apparatus, and a device, a storage medium and a computer program product. The method comprises : in response to a morphing trigger operation for a target image, determining an image morphing area from the target image; when it is determined that the image morphing area includes a morphing protection area, determining, according to position information of the morphing protection area, morphing movement information corresponding to image content in the morphing protection area; and performing morphing movement on the image content in the morphing protection area according to the morphing movement information. By means of the embodiments of the present disclosure, the morphing limit between image content in a non-protection area and image content in a protection area in an image area to be subjected to morphing can be better weakened, and the natural transition of the degree of morphing of the image content in the non-protection area and the image content in the protection area is better achieved, thereby enhancing the realism of beautification and morphing of the image content in said image area, achieving effective beautification and morphing of the image content, and improving the user experience of applications used for image beautification and morphing.

## Description

This application claims priority to Chinese Patent Application No. 202211584120.1, filed on December 9, 2022, the entire disclosure of which is incorporated herein by reference as part of the present disclosure.

### TECHNICAL FIELD

The present disclosure relates to an image processing method, an apparatus, a device, a storage medium, and a computer program product.

### BACKGROUND

At present, image beautification is very popular among the public. People can adjust and correct selected images using application software with the image beautification function. For example, one can beautify a person in an image by means of body and face slimming, or can carry out beautification with respect to body height.

In a function application for image beautification, when beautifying a person in an image, it involves adjusting a shown form of the subject to be beautified. At the same time of adjusting the shown form of the subject to be beautified, the form of a background region in the image will be caused to change. The problem of image warping or deformation often arises from the background region after the form is changed, which affects the presentation effect of the image.

Some approaches to solve the above-mentioned problem may be manually restoring a transitional beautified region by a user, or directly keeping away from a non-beautification region selected in advance using an image processing algorithm in an image beautification process. However, the user cannot well restore a morphed region, and the restoration effect of the morphed region is poor. The problem of unnatural processing effect may arise from image beautification by some image processing algorithms.

### SUMMARY

The present disclosure provides an image processing method, an apparatus, a device, a storage medium, and a computer program product, to realize effective beautifying and morphing of the image contents to be beatified in the image.

On the first aspect, embodiments of the present disclosure provide an image processing method, comprising: in response to a morphing triggering operation for a target image, determining an image morphing region from the target image; in response to determining that the image morphing region comprises a morphing protection region, determining morphing moving information corresponding to an image content in the morphing protection region according to position information of the morphing protection region; and morphing and moving the image content in the morphing protection region according to the morphing moving information.

On the second aspect, embodiments of the present disclosure provide image processing apparatus, comprising: a region determination module configured to, in response to a morphing triggering operation for a target image, determine an image morphing region from the target image; an information determination module configured to, in response to determining that the image morphing region comprises a morphing protection region, determine morphing moving information corresponding to an image content in the morphing protection region according to position information of the morphing protection region; and a protection region morphing module configured to morph and move the image content in the morphing protection region according to the morphing moving information.

On the third aspect, embodiments of the present disclosure provide an electronic device, comprising: one or more processors; a storage apparatus configured to store one or more programs. The one or more programs, when executed by the one or more processors, cause the one or more processors to implement the image processing method provided by any one embodiment of the present disclosure.

On the fourth aspect, embodiments of the present disclosure provide a computer-readable storage medium, storing a computer program which, when executed by a processor, implements the image processing method provided by any one embodiment of the present disclosure.

On the fifth aspect, embodiments of the present disclosure provide a computer program product, comprising a computer program which, when executed by a processor, implements the image processing method provided by any one embodiment of the present disclosure.

### BRIEF DESCRIPTION OF DRAWINGS

The above and other features, advantages and aspects of different embodiments of the present disclosure will become more apparent from the accompanying drawings and the following specific embodiments. Identical or similar reference numerals indicate identical or similar elements throughout the drawings. It will be understood that the drawings are illustrative, and components and elements are not necessarily drawn to scale.
Fig. 1 is a flowchart of an image processing method provided by an embodiment of the present disclosure;
Fig. 1a is a diagram illustrating an example of meshed data recorded image in the image processing method provided by the embodiment;
Fig. 2 is a flowchart of an image processing method provided by an embodiment of the present disclosure;
Fig. 2a is a diagram showing an effect after an image morphing region is morphed by the image processing method provided by the embodiment;
Fig. 3 is a structural schematic diagram of an image processing apparatus provided by an embodiment of the present disclosure; and
Fig. 4 is a structural schematic diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

Names of messages or information exchanged between a plurality of apparatuses in embodiments of the present disclosure are only used for the purpose of description and not meant to limit the scope of these messages or information.

It will be understood that before using the technical solutions disclosed in various embodiments of the present disclosure, a user should be notified of a type, a range of use, a usage scenario, etc. of personal information involved in the present disclosure in an appropriate manner in accordance with relevant laws and regulations, and these should be authorized by the user.

For example, in response to receiving an active request from a user, a prompt message is sent to the user to explicitly prompt the user that the operation the user requests to perform will require to acquire and use the personal information of the user. Thus, the use can independently select, according to the prompt message, whether or not to provide the personal information to software or hardware such as an electronic device, an application, a server or a memory medium that performs the operations of the technical solutions of the present disclosure.

As an alternative but non-limiting implementation, in response to receiving an active request from a user, a manner of sending a prompt message to the user may be, for example, using a pop-up window in which the prompt message may be presented in the form of text. Furthermore, the pop-up window may also carry option controls for a user to select to "agree" or "disagree" with providing personal information to an electronic device.

It will be understood that the processes of notifying of and authorizing by a user described above are merely exemplary and do not constitute a limitation on the implementations of the present disclosure, and other manners meeting relevant laws and regulations may also be applied to the implementations of the present disclosure.

It will be understood that data (including but not limited to data itself, and the acquisition and use of data) involved in the present technical solutions should follow corresponding laws and regulations and requirements of relevant stipulations.

It needs to be noted that the application scenario of the embodiments can be described as follows: a user of the image beautification function wants to beautify and adjust the display form of an image content in a certain region in a selected image, e.g., wants to slim and beautify a human face in the selected image, or to slim and beautify the body of a person in the image. When an image is beautified by some image processing methods, if a target region not to be beautified is not selected in advance, other background objects in the image will also be beautified and morphed while beautifying an object to be beautified, thereby leading to warping and deformation of the background region. If the target region not to be beautified can be selected in advance, when the object to be beautified is beautified, the image content in the target region will not be affected by beautification and morphing. There are only two states of performing morphing processing and skipping over morphing processing for the results of pixels in the processed image, and the processing effect is unnatural. It is easy to find that the image content is obviously extruded at the edge of the target region.

An image processing method provided by the embodiments can effectively improve to be problem of an unnatural transition between a target protection region and an edge of a region to be morphed and thus realize natural beatification of an image content.

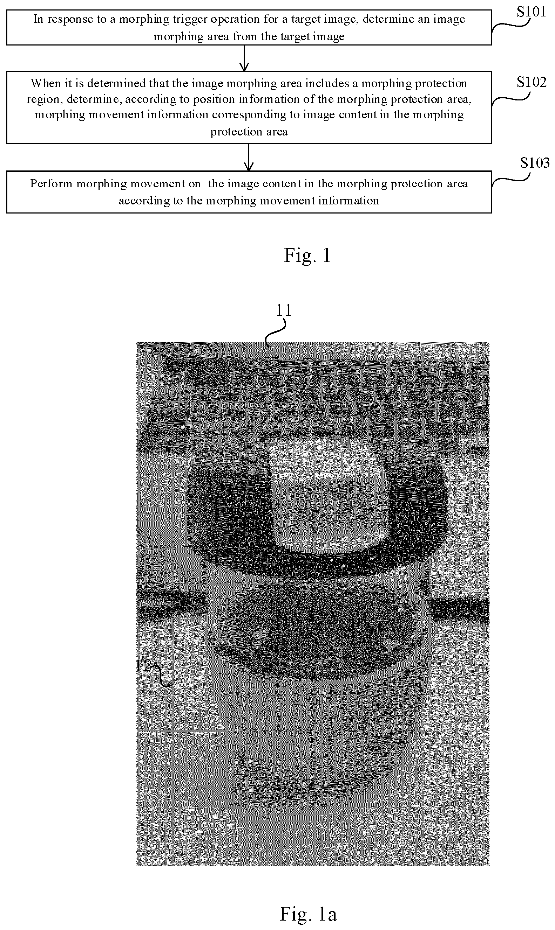

Fig. 1 is a flowchart of an image processing method provided by an embodiment of the present disclosure. This embodiment of the present disclosure is applicable to a scenario of morphing an image content in an image. The image processing method may be performed by an image processing apparatus that may be implemented in the form of software and/or hardware and optionally implemented by an electronic device. The electronic device may be a mobile terminal, a personal computer (PC), a server, or the like.

As shown in Fig. 1, the image processing method of the embodiment of the present disclosure may include the following steps.

At S101, in response to a morphing triggering operation for a target image, an image morphing region is determined from the target image.

In this embodiment, the target image may be construed as an image to be beautified that is preselected by a participant. The target image may be a human image including a portrait. The morphing triggering operation may be construed as a function triggering operation that activates beautification on an image content in the target image. A generation process of the morphing triggering operation may be described as follows: first, an image beautification function icon may be triggered to enter an image editing interface for image beautification; subsequently, the target image selected by the participant may be received; and then the morphing triggering operation may be generated after the participant selects an image region to be beautified and morphed in the target image.

Exemplarily, in the perspective of visual interaction, an image beautification function icon on a desktop may be triggered to enter and present an image editing interface. After an image selecting control is triggered, the selected target image may be shown in a region of the image editing interface. Whether the morphing triggering operation is received may be then detected continuously after a set control (e.g., a morphing operation triggering control) is triggered, wherein the morphing triggering operation may be generated after the participant selects the image region to be beautified and morphed in the target image. This step may serve to determine the image morphing region from the target image in response to the received morphing triggering operation.

The selected image region to be beautified and morphed in the target image may be denoted as the image morphing region. In this embodiment, the image morphing region may be selected by the participant in a touching and sliding manner, or may be selected in a mouse dragging manner. For example, when the target image is a human image, an image region including a human face may be selected as the image morphing region as described above. In this embodiment, the morphing triggering operation may be responded by this step after the morphing triggering operation is generated, and the image morphing region may also be determined from the target image after responding to the morphing triggering operation.

Exemplarily, a determination process of the image morphing region may be described as follows: first, related meshed image data may be extracted from the morphing triggering operation, which may include, for example, coordinate information of trajectory points of a sliding trajectory formed by touching and sliding, coordinate information of a rectangular region of a dragging rectangle formed by mouse dragging, etc.; an enclosed region may be then determined as the image morphing region in the target image based on the meshed image data, and the image morphing region may be recorded using corresponding region information.

It can be known that the target image and the image morphing region may be recorded in units of conventional pixels, or the target image and the image morphing region may also be recorded in a mesh form. In this embodiment, the meshed image data may be recorded, e.g., in the mesh form. Specifically, the target image of which image data is recorded in units of pixel points may be initially obtained, and then conversion in the mesh form may be performed. Specifically, a size of a mesh unit may be determined. Each mesh may be considered as being composed of two triangle patches. One mesh may be represented by four vertexes constituting the mesh. Compared with a traditional pixel recording manner, the manner of recording the image data using meshes can better save a storage space occupied by image data recording and can also facilitate subsequent data processing.

At S102, in response to determining that the image morphing region includes a morphing protection region, morphing moving information corresponding to an image content in the morphing protection region is determined according to position information of the morphing protection region.

In this embodiment, the image morphing region determined in the above step is mainly used for realizing beautifying and morphing of the image content in the region. Its core consists in the need for firstly determining whether the image morphing region includes the morphing protection region before performing morphing processing on the image morphing region. If the image morphing region includes the morphing protection region, the morphing processing may be performed on the image content in the morphing protection region by this step.

In this embodiment, the morphing protection region may be construed as a region needing to be protected against morphing in image beautifying and morphing processing. In this embodiment, the case that the image morphing region includes the morphing protection region may be described as follows: whether a target protection region is delimited in advance in the target image is determined; whether the image morphing region has a subregion falling into the target protection region is then determined on the premise of having the target protection region delimited ; and if yes, it can be determined that a morphing protection region is present in the image morphing region. Exemplarily, when the target image is a human image, a background region in the selected image morphing region may be regarded as a morphing protection region.

In this step, after determining that the image morphing region includes a morphing protection region, it is equivalent to obtaining meshed image data related to the morphing protection region. The position information of the morphing protection region can be obtained with the meshed image data of the morphing protection region. The morphing moving information of the image content in the morphing protection region can be then determined with the position information.

In a specific implementation, mesh region position information of each mesh region included in the morphing protection region can be determined with the position information of the morphing protection region. A distance of the corresponding mesh region from an edge of the morphing protection region can be determined with the mesh region position information. The morphing moving information that the related image content in the mesh region should have can be then determined according to the determined distance.

In this embodiment, the morphing moving information of the image content may be construed as a morphing moving amplitude value for pixels constituting the image content in morphing, or a morphing moving distance. Image contents at different region positions may have different morphing moving information, or the morphing moving information of the image contents in some regions may be unchanged or of a set value representing not moving, i.e., the image contents in the regions may not be morphed and moved.

In this embodiment, the morphing and moving degree of the image content in the morphing protection region can be differentiated in the above-mentioned manner. Thus, gradual changing of the morphing degrees of the image contents in a non-morphing protection region and the morphing protection region is realized, thus rendering the morphing of the image content in the image morphing region more natural.

At S103, the image content in the morphing protection region is morphed and moved according to the morphing moving information.

In this embodiment, after the morphing moving information of the image content in the morphing protection region is determined by the above step, the image content in the morphing protection region may be controlled to be morphed and moved according to the relative morphing moving information by this step. Morphing moving may be construed as changing of a position where a certain piece of pixel information is presented in the image content. For example, an original position where the pixel information is presented in the image content within a mesh region in a morphing moving region is adjusted according to a morphing moving amplitude given in the morphing moving information.

In this embodiment, in the morphing protection region, positions where the pixel information is presented in some image contents after the morphing moving have changed as compared with those before the morphing moving, which is visually equivalent to extruding or shortening the presentation effect of the image contents.

The above technical solutions of the embodiments of the present disclosure are not intended to beautify, by morphing and moving, a content of a non-protection region in an image region to be morphed, and the technical solution, when the selected image morphing region includes the morphing protection region, it is also taken into consideration that the image content in the morphing protection region is morphed and moved according to a determined morphing moving information. The above-mentioned implementation of the technical solution can better weaken a morphing boundary between the image contents in the non-protection region and the protection region in the image region to be morphed, better achieve a natural transition between morphing degrees of the image contents in the non-protection region and the protection region, render the beautified and morphed image contents in the image region to be morphed more realistic, realize effective beautifying and morphing of the image contents, and enhance the user experience in image beautifying and morphing applications.

As a first optional embodiment of the embodiments of the present disclosure, on the basis of the above embodiments, the first optional embodiment may further include the following step: for a non-morphing protection region in the image morphing region, morphing and moving an image content in the non-morphing protection region with a morphing moving value determined according to the morphing triggering operation, wherein the non-morphing protection region is a region other than the morphing protection region in the image morphing region.

In this optional embodiment, a morphing processing logic for the image content in the non-morphing protection region in the image morphing region is further given. Specifically, an image region in the image morphing region that does not fall into the preset target protection region may be denoted as the non-morphing protection region, or the whole image morphing region may be denoted as the non-morphing protection region when it is determined that no target protection region is preset for the target image.

In this embodiment, the morphing moving of the image content in the non-morphing protection region in the image protection region may be realized by the above added logical step. In a specific implementation, a morphing moving value included in the morphing triggering operation may be acquired. The morphing moving value may be determined based on a sliding amplitude of triggering sliding performed when the morphing triggering operation is generated, or determined based on a dragging amplitude of a mouse dragging operation performed when the morphing triggering operation is generated.

As described above, in this embodiment, all the image contents in the non-morphing protection region can be morphed and moved with the determined morphing moving value. Likewise, the visual presentation effect of the morphing moving of the image content in the non-morphing protection region may be described as the presentation position of the pixel information included in the image content changing by adjustment with the morphing moving value.

It needs to be noted that the meshed image data of the target image is recorded, e.g., in the form of the mesh region in this embodiment. In determining the morphing protection region and the non-morphing protection region in this embodiment, the meshed image data in the form of the mesh region may be used as a data support in image processing. Correspondingly, the image morphing region, the morphing protection region and the non-morphing protection region may be all recorded in the form of the mesh data.

The technical solution of the above first optional embodiment further realizes the morphing moving of the image content included in the non-morphing protection region in the image morphing region. According to the above technical solutions, the image morphing region is divided into the morphing protection region and the non-morphing protection region; different morphing moving information is determined for the image contents at different positions in the morphing protection region such that differentiated morphing moving of the image contents in the morphing protection region is realized and transitional morphing of an edge region in the morphing protection region is reflected. On the other hand, normal morphing of each image content in the non-morphing protection region is also guaranteed. The above technical solutions render the beautified and morphed image contents in the image region to be morphed more realistic, realize effective beautifying and morphing of the image contents, and enhance the user experience in image beautifying and morphing applications.

As a second optional embodiment of the embodiments of the present disclosure, on the basis of the above embodiments, as an optimization, the following step may be further included: in response to an acquiring operation for a protection region of the target image, determining a target protection region from the target image, wherein the target protection region is used for determining the morphing protection region.

It can be known that in the above-mentioned implementation of determining the morphing protection region in the image morphing region, one key condition consists in the target protection region preset for the target image involved in image processing. In the second optional embodiment, as an optimization, an implementation logic of the target protection region is added. Specifically, the determination of the target protection region may be performed after receiving the acquiring operation for the protection region. By the step of the second optional embodiment, the acquiring operation for the protection region can be responded, and then the target protection region can be determined from the target image.

The acquiring operation for the protection region may be construed as a triggering operation for selecting an image region needing to be protected against morphing from the target image.

In an implementation form of the acquiring operation for the protection region, a protection region selection button (or a protection region selecting control) can be presented in the image editing interface showing the target image. After the participant taps on the protection region selection button, the acquiring operation for the protection region can be triggered and generated.

In another implementation form of the acquiring operation for the protection region, the participant may perform a specific touch gesture in the image editing interface showing the target image, and the specific touch gesture is used to trigger and generate the acquiring operation for the protection region.

After the acquiring operation for the protection region is generated in the above implementation forms, intelligent determination of a picture region in the target image can be realized by a set intelligent identification algorithm, and the identified picture region is directly used as the target protection region. For example, when the target image is a human image, only a person in the image is identified, and the picture region other than the person in the image is identified as the target protection region. The target protection region may also be delineated directly in a fixed geometrical shape.

Moreover, after the acquiring operation for the protection region is generated in the above implementation forms, an operation monitoring thread may be started to monitor whether there is a touch-and-slide action for selecting the target protection region, or to monitor whether there is a mouse dragging action for selecting the target protection region. By identifying the image region associated with the touch-and-slide action or the mouse dragging action, the picture region corresponding to the action in the target image is then determined. Finally, the determined picture image is taken as the target protection region.

As described above, after responding to the triggered acquiring operation for the protection region, the related image data information can be extracted from the target protection region determined by intelligent identification or the target protection region determined by monitoring based on the selection action, thereby obtaining the meshed data recording the target protection region.

The technical solution of the above second optional embodiment provides logical implementation of determining the target protection region. The determined target protection region may be used as premise information for image beautifying and morphing processing to determine the morphing protection region in the image morphing region. The above technical solution provides a basic data support for logical implementation of image processing provided in this embodiment, and also serves as a key distinguishing feature of image beautifying and morphing from some technical solution implementations.

On the basis of the above second optional embodiment, as an implementation of the second optional embodiment, determining the target protection region from the target image may be specifically optimized to the following steps.

a0) Region position information associated with the acquiring operation for the protection region is determined.

In this embodiment, after receiving the acquiring operation for the protection region, one implementation may be described as follows: by monitoring the selection action (the touch-and-slide action or the mouse dragging action) performed by the participant, operation related information included in the monitored selection action is extracted. The operation related information may include touch trajectory information or include mouse dragging trajectory information.

Another implementation may be described as follows: intelligent identification of the protection region is performed based on a given intelligent identification strategy, and the region information of the identified protection region is extracted; or the protection region is delineated in a set geometrical shape and the region information of the delineated protection region is extracted.

The operation related information or the region information may be obtained by the above implementation logic as the region position information in this step.

Exemplarily, if the monitored selection action includes the touch trajectory information or the dragging trajectory information, the image region associated with touch or dragging can be determined based on the above-mentioned information, and the region position information of the image region can be obtained. If the region information of the identified region identified by the intelligent identification is obtained or the region information of the region in the set geometrical shape is obtained, the obtained region information may be directly used as the region position information. In this embodiment, the region position information may be recorded by edge coordinates constituting the selected image region.

b0) Protection region mesh data is determined according to the region position information in combination with meshed data of the target image.

In this embodiment, as an optimization, the image information of the target image may be recorded in the form of the meshed data. It needs to be noted that the conventional recoding form of an image is to record pixel information of each pixel in the image. This recording manner needs to occupy a large storage space. For example, the meshing recording form is used in this embodiment. That is, an image is meshed, and only coordinates of vertexes of each mesh are recorded, and not all pixels are recorded. One mesh may be a combination of two triangle maps. In order to guarantee the validity of the image data information, mesh regions set for each image are dense, and each mesh region might only include a certain number of pixels.

For each mesh region, the image information may be recorded using two sets of coordinate data, wherein one set of coordinate data is mainly coordinates of vertex positions of the mesh region, and the other set of coordinate data is mainly data recording color information of the mesh region. The color information is not directly recorded in the coordinate data, and instead, the position coordinates of the color information in the original image are recorded. Thus, the color information at the position of the coordinates can be extracted from the original image with the coordinate data.

After the region position information is acquired, the data information of the mesh region matching the region position information can be found from the meshed data of the target image. Thus, the meshed data of the protection region is obtained. The meshed data is denoted as the protection region mesh data in this embodiment. From the above description, it can be known that the protection region mesh data determined in this step actually includes the related mesh data of all the mesh regions constituting the protection region, which may specifically include horizontal and vertical coordinates of vertexes of each mesh region in the protection region, and vertex sampled horizontal and vertical coordinates recording the color information of each mesh region.

Fig. 1a is a diagram illustrating an example of meshed data recorded image in the image processing method provided by the embodiment. As shown in Fig. 1a, there is shown a mesh effect of the target image 11 after meshing. The target image 11 shown in the mesh effect may include many small mesh regions 12. For the target image 11, the image data may be recorded in the meshing form based on the region information of each mesh region. It needs to be noted that in order to facilitate effect showing in Fig. 1a, the presented mesh region is relatively large. In practical use, the divided mesh regions of an image are highly dense, and a size of each mesh region after meshing is relatively small.

For the determination of mesh regions of the target image, its implementation steps may be described as follows: the relative target image is divided into triangle patches; two adjacent triangle patches may be then combined to form a mesh region; and finally, many mesh regions each composed of two adjacent triangle patches can be obtained.

It needs to be noted that Fig. 1a merely shows the effect of one mesh region. At the visual interaction level of image beautifying processing, the participant cannot directly see the target image divided into mesh regions.

c0) The target protection region recorded using the protection region mesh data is obtained from the target image.

In this optional embodiment, the region position and the region color information, etc. of the protection region can be determined from the protection region mesh data obtained by the above step. The target protection region is represented using the protection region mesh data in this embodiment.

For the implementation of determining the target protection region in the second optional embodiment, it is considered that the target image is recorded in the form of the meshed data. When the target protection region is determined with the meshed data, on the premise of guaranteeing the accuracy of determining the protection region, the storage space occupied to record the image data is effectively reduced.

On the basis of the above embodiment, the condition for the image morphing region including the morphing protection region is as follows: for example, the target protection region is predetermined for the target image, and the image morphing region includes the morphing protection region belonging to the target protection region.

In this embodiment, in the beautifying and morphing processing process of the target image, its core ideal may be described as follows: after the image morphing region to be beautified and morphed in the target image is determined, it needs to be first determined whether the image morphing region includes a region needing to be protected against morphing; if no, the moving and morphing of the image content in the image morphing region can be controlled according to the determined morphing moving value; and if yes, the position of the region protected against morphing needs to be analyzed, and then a moving intensity of morphing moving can be determined according to an analysis result. By beautifying and morphing implemented with the above processing logic, the problem of unnatural beautifying and morphing effect can be effectively avoided.

It needs to be noted that the condition for determining whether the image morphing region includes the morphing protection region in this optional embodiment may be as follows: the target protection region to be protected against morphing is present in the target image to be subjected to beautifying and morphing processing, and it can be determined that an image content falling into the target protection region is present in the selected image morphing region. In this embodiment, the morphing protection region in the image morphing region may be constructed based on the region of the image content.

On the basis of the above second optional embodiment of the embodiments of the present disclosure, a formation manner of the acquiring operation for the protection region and the morphing triggering operation in the method provided in this embodiment is further given, which may specifically include the following steps.

a1) An image editing interface is presented, wherein the target image is shown in a first region of the image editing interface.

Exemplarily, the image editing interface of the image beautifying application software may be entered in response to triggering an image beautifying application icon on a desktop.

A selection control for an image to be beautified may be shown in a menu bar or a control showing region of the image editing interface. In response to triggering the selection control for an image to be beautified, the image to be beautified selected by the participant can be obtained, which is denoted as the target image in this embodiment. In this embodiment, the target image can be shown in the first region of the image editing interface.

The first region may be an image editing region in the image editing interface.

b1) A protection region selecting control is shown in a second region of the image editing interface, and the acquiring operation for the protection region to determine the target protection region in the target image is generated after triggering the protection region selecting control.

It can be known that the protection region selecting control is further shown in the image editing interface. The protection region selecting control may be specifically shown in the second region of the image editing interface and can be used to guide the participant to select a protection region. As described above, after selecting the target image, the participant can trigger the protection region selecting control shown in the second region. In this embodiment, the acquiring operation for the protection region can be generated after responding to the triggering operation.

Based on the description of the above technical implementation of this embodiment, the acquiring operation for the protection region can be responded based on the corresponding method steps, and then the target protection region is determined in the target image.

c1) A morphing operation triggering control is shown in a third region of the image editing interface, and the morphing triggering operation performed on the target image in the first region is received after triggering the morphing operation triggering control.

In this embodiment, the morphing operation triggering control may also be shown in the image editing interface. The morphing operation triggering control may be specifically shown in the third region of the image editing interface and can be used to guide the participant to select a morphing region.

Exemplarily, triggering the morphing operation triggering control by the participant may be performed after determining the target protection region by the generated acquiring operation for the protection region. After the morphing operation triggering control is triggered, it can be considered that a performing agent for the image processing method provided by this embodiment enters a monitoring mode for morphing region selection. Specifically, whether the morphing triggering operation generated after the participant performs related morphing region selection on the target image is received can be monitored. After receiving the morphing triggering operation, the image morphing region can be determined from the target image by the above method step provided in this embodiment.

It needs to be noted that the steps a1 to c1 described above in this embodiment are equivalent to illustrating the implementation of the morphing processing on the image in the perspective of visualization. The protection region selecting control and the morphing operation triggering control are shown in the image editing interface to better guide the participant to perform the beautifying and morphing operation on the image, and when the participant uses an image beautifying and morphing function application, an operation teaching of firstly selecting a protection region and then selecting a morphing region is given to the participant. Thus, on the basis of guaranteeing the image beautifying and morphing effect, the user experience of the image morphing and beautifying function is better enhanced.

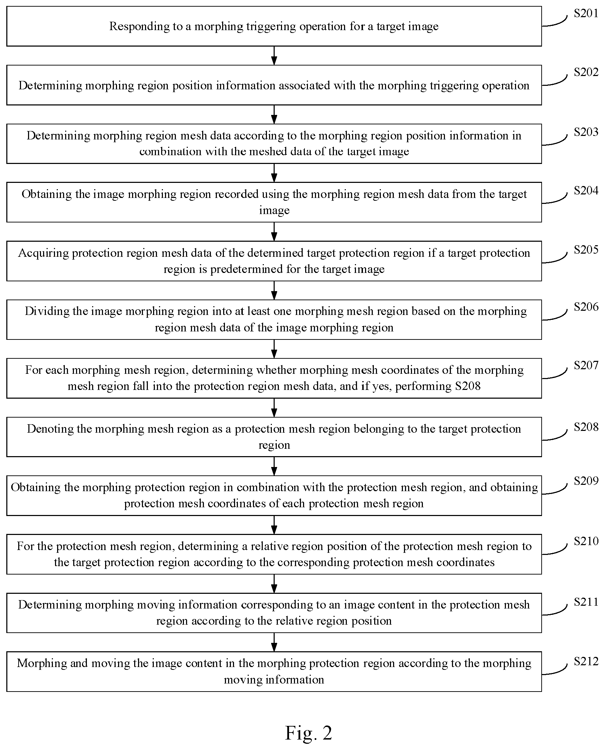

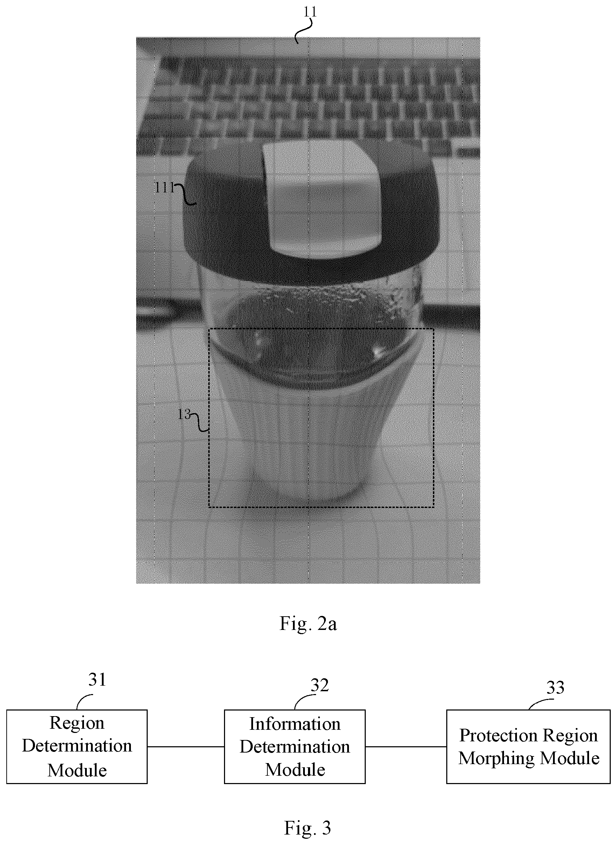

As a third optional embodiment of the embodiments of the present disclosure, on the basis of the above optimizations, Fig. 2 illustrates a flowchart of an image processing method provided by an embodiment of the present disclosure. As shown in Fig. 2, the image processing method provided by this embodiment may include the following steps.

At S201, a morphing triggering operation for a target image is responded.

Exemplarily, the received morphing triggering operation may be responded by this step. The morphing triggering operation may be performed after selecting the target image, or may be performed after selecting a target protection region from the target image. The target protection region may be determined after responding to an acquiring operation for a protection region. The acquiring operation for the protection region may be generated after a related participant performs a related operation in an image editing interface of the selected target image. The performed operation may be triggering a protection region selection button, or may be triggering based on a specific touch gesture.

In this embodiment, the following steps S202 to S204 provide a specific implementation of an image morphing region.

At S202, morphing region position information associated with the morphing triggering operation is determined.

In this embodiment, the included operation related information can be extracted from the morphing triggering operation responded. The operation related information may include touch trajectory information when the participant selects a morphing region in a touching manner, or may include dragging trajectory information when the participant selects a morphing region in a mouse dragging manner.

Exemplarily, the touch trajectory information or the dragging trajectory information can be extracted from the morphing triggering operation by this step. Thus, a corresponding trajectory line can be formed. A radiation region of the trajectory line in the target image can be then determined, and the region position information of the radiation region of the trajectory line can be determined. The radiation region can be regarded as the image morphing region selected by the participant, and the corresponding region position information can be used as the morphing region position information of this embodiment.

In this embodiment, a size of the radiation region of the trajectory line may be determined by a width and a length of the trajectory line. When the trajectory line is relatively wide and long, the area of the corresponding radiation region is relatively large. When the trajectory line is relatively thin and short, the area of the corresponding radiation region is relatively small. The width and the length of the trajectory line can be determined according to a contact area when the participant performs the touch operation in the target image, or may be determined according to a thickness of a corresponding cursor point when dragging the mouse in the target image.

It can be known that the edge coordinate data of the image morphing region can be recorded in this embodiment. When the target image is recorded using meshed data, the edge coordinate data may be vertex coordinate information of a mesh region at the edge.

At S203, morphing region mesh data is determined according to the morphing region position information in combination with the meshed data of the target image.

In this embodiment, the meshed data recording the target image can be acquired. After the morphing region position information is acquired, the data information of the mesh region matching the morphing region position information can be found from the final version of the meshed data, thus obtaining the mesh data of the morphing region recorded using the meshed data.

Based on the above description of the data content included in the mesh region, it can be known that the morphing region mesh data determined in this step actually includes the related mesh data of all the mesh regions constituting the morphing region, which may specifically include horizontal and vertical coordinates of vertexes of each mesh region in the morphing region, and vertex sampled horizontal and vertical coordinates recording the color information of each mesh region.

At S204, the image morphing region recorded using the morphing region mesh data is obtained from the target image.

In this embodiment, the region position and the region color information, etc. of the morphing region can be determined from the morphing region mesh data obtained by the above step. The morphing region represented using the morphing region mesh data is denoted as the image morphing region in this embodiment.

The following steps S205 to S209 of this embodiment provide a specific implementation of determining whether a morphing protection region is present in the image morphing region.

At S205, if a target protection region is predetermined for the target image, protection region mesh data of the determined target protection region is acquired, and S206 is performed.

In this embodiment, in the determined image morphing region, whether the target image has the target protection region is checked and determined. The target protection region can be determined by determining whether the protection region mesh data is recorded for the target image. When the protection region mesh data is recorded for the target image, it can be considered that the target protection region is predetermined for the target image, and the recorded protection region mesh data can be acquired by this step.

It needs to be noted that if there is no protection region mesh data, it can be considered the target image currently has no target protection region, and the subsequent steps of this embodiment do not need to be performed, and the image morphing region can be directly determined as a non-morphing protection region. Thus, an image content in the image morphing region can be moved and morphed using a performing logic provided for the non-morphing protection region in this embodiment.

At S206, the image morphing region is divided into at least one morphing mesh region based on the morphing region mesh data of the image morphing region.

In this embodiment, as described in the above step, if the target protection region is present in the target image, whether the image morphing region includes the morphing protection region falling into the target protection region can be further determined by this step to step S209.

Specifically, firstly, the morphing region mesh data of the determined image morphing region can be acquired by this step, and then related data constituting each unit mesh region can be extracted from the morphing region mesh data, and each unit mesh region can be regarded as a morphing mesh region. It can be considered that there are as many morphing mesh regions as the related data of unit mesh regions included in the morphing region mesh data.

At S207, for each morphing mesh region, whether morphing mesh coordinates of the morphing mesh region fall into the protection region mesh data is determined, and if yes, S208 is performed.

This step is equivalent to processing of each morphing mesh region. From the above description, it can be known that each morphing mesh region may be represented by two sets of coordinate data, wherein one set is horizontal and vertical coordinates of vertexes of the morphing mesh region, and this set of horizontal and vertical coordinates of vertexes can be denoted as morphing mesh coordinates of the morphing mesh region in this embodiment.

In this step, the morphing mesh coordinates may be matched with each set of horizontal and vertical coordinates of vertexes included in the protection region mesh data. If the horizontal and vertical coordinates of each vertex in the morphing mesh coordinates are in the protection region mesh data, it can be considered that the morphing mesh coordinates fall into the protection region mesh data. In this case, step S208 can be performed.

If the horizontal and vertical coordinates of a vertex not in the protection region mesh data are present in the morphing mesh coordinates, it can be considered that the morphing mesh coordinates do not fall into the protection region mesh data. In this case, it can be considered that the morphing mesh region corresponding to the morphing mesh coordinates belongs to the non-morphing protection region in this embodiment. At this time, the subsequent steps do not need to be performed. Also, the image content in the image morphing region can be moved and morphed using the performing logic provided for the non-morphing protection region in this embodiment.

At S208, the morphing mesh region is denoted as a protection mesh region belonging to the target protection region.

After the determination of S207 is satisfied, the morphing mesh region can be denoted as the protection mesh region belonging to the target protection region by this step. S207 and S208 are suitable for processing each morphing mesh region in the image morphing region.

At S209, the morphing protection region is obtained in combination with the protection mesh region, and protection mesh coordinates of each protection mesh region are obtained.

Each protection mesh region determined based on the above steps can be gathered by this step, and the morphing protection region in the image morphing region can be constructed based on each protection mesh region. It can be appreciated that after each protection mesh region is determined, horizontal and vertical coordinates of vertexes of each protection mesh region can be obtained accordingly, which can be denoted as protection mesh coordinates of the protection mesh region in this embodiment.

In this embodiment, morphing moving information of an image content included in the morphing protection region can be determined by S210 and S211 below.

At S210, for the protection mesh region, a relative region position of the protection mesh region to the target protection region is determined according to the corresponding protection mesh coordinates.

In this embodiment, to determine the morphing moving information of the image content included in the morphing protection region, each protection mesh region may also be used as a logical processing unit, and the related logic is performed by this step.

Exemplarily, for each protection mesh region, the protection mesh coordinates of the protection mesh region can be obtained; meanwhile, after the protection region mesh data of the target protection region is known, a mesh region constituting an edge region in the target protection region can be found. A distance of the protection mesh coordinates from the mesh region as the edge region can be then calculated, and the relative region position of the protection mesh region to the target protection region can be recorded with a distance calculation result.

Specifically, determining the relative region position of the protection mesh region to the target protection region according to the corresponding protection mesh coordinates may be further optimized as the following steps in the embodiments of the present disclosure:
a2) An edge mesh region of the target protection region is determined, and edge mesh coordinates of the edge mesh region are acquired.

In this embodiment, the mesh region at the edge of the target protection region can be determined with the protection region mesh data of the target protection region, which is denoted as an edge mesh region in this embodiment, and the edge mesh coordinates of each edge mesh region can be acquired. The edge mesh coordinates also include the information of horizontal and vertical coordinates of each vertex of the edge mesh region.

b2) A relative distance of the protection mesh region from the edge mesh region is determined according to the edge mesh coordinates and the protection mesh coordinates.

In this embodiment, one target protection region may include a plurality of edge mesh regions, and each edge mesh region correspondingly has one pair of edge mesh coordinates. A distance of the protection mesh coordinates from each edge mesh coordinates may be calculated by this step to determine the relative distance of protection mesh region from each edge mesh region.

c2) Whether the relative distance is greater than a set edge threshold is determined; if yes, step d2) is performed; and if no, step e2) is performed.

The set edge threshold is given in this embodiment as a criterion for determining whether the image content in the morphing protection region is involved in morphing and moving. In this step, each relative distance may be compared with the set edge threshold, or a minimum distance value of the relative distances may also be directly compared with the set edge threshold to determine whether the relative distance is greater than the set edge threshold.

It can be appreciated that if the minimum relative distance is still greater than the set edge threshold, it can be considered that the protection mesh region is at a position close to the center of the target protection region, and in this case, step d2) can be performed. On the contrary, if the minimum relative distance is less than or equal to the set edge threshold or there are other relative distances less than or equal to the set edge threshold, it can be considered that the protection mesh region is at a position close to the edge of the target protection region, and in this case, step e2) can be performed.

d2) The protection mesh region being within the target protection region is taken as the relative region position.

This step is a subsequent performing logic for the relative distance being greater than the set edge threshold, and the relative region position at this time may be the protection mesh region being within the target protection region.

e2) The protection mesh region being at the edge of the target protection region is taken as the relative region position.

This step is a subsequent performing logic for the relative distance being less than or equal to the set edge threshold, and the relative region position at this time may be the protection mesh region being at the edge of the target protection region.

In this optional embodiment, the above logical step is mainly performed to determine the relative region position of the protection mesh region to the target protection region. The determined relative region position may be used as a basic data support for determining the morphing moving information.

At S211, morphing moving information corresponding to an image content in the protection mesh region is determined according to the relative region position.

In this embodiment, after the relative region position of the protection mesh region to the target protection region is obtained, the matching morphing moving information can be determined with the relative region position. In this embodiment, the moving information of the image content within the morphing protection region in the image morphing region is related to the position of each protection mesh region included in the morphing protection region.

Exemplarily, this embodiment takes into consideration that the protection mesh region at the edge position of the target protection region is morphed and moved at a small morphing amplitude, and the protection mesh region located within the target protection region, i.e., at the center position of the target protection region, may not be subjected to morphing and moving.

The reason for determining the morphing moving information in the above manner is as follows: the target protection region delimited in the target image can be regarded as an image region in the target image that the participant does not want to beautify and morph. In the process of performing the morphing processing on the determined image morphing region, when the morphing protection region falling into the target protection region is present in the image morphing region, if all the image contents in the morphing protection region are controlled not to be morphed and moved, an obvious boundary between a non-morphed region and a morphed region will appear at the edge position of the target protection region, thereby resulting in the problem of unnatural image presentation effect after the beautifying and morphing processing.

By the processing logic of this embodiment, morphing performing gradually changing in morphing strength is performed on the protection mesh region at the edge position of the target protection region. Since the morphing strength changes gradually, the morphing amplitude of the image content in the protection mesh region closer to the non-morphing protection region is greater. The morphing amplitude of the image content may be determined by looking up in a predetermined protection strength information table. Firstly, the protection strength of the morphing protection region can be obtained by looking up in the protection strength information table. The protection strength information may be a value between 0 and 1. The morphing amplitude of the morphing protection region can be determined based on the protection strength and a morphing moving value associated with the morphing triggering operation. Finally, the morphing amplitude can be used as the morphing moving information of the image content in the protection mesh region.

Specifically, determining the morphing moving information corresponding to the image content in the protection mesh region according to the relative region position may be further optimized as the following steps in the embodiments of the present disclosure:
a3) When the relative region position is the protection mesh region being within the target protection region, the morphing moving information corresponding to the image content in the protection mesh region is determined as unchanged.

It can be known that in this case, it can be considered that the position of the protection mesh region is within the range of the central region of the target protection region. In consideration of the image content of the target protection region being an object not involved in morphing and moving, the morphing moving information of the protection mesh region within the central range can be set a data value representing an unchanged position, e.g., 0, in this embodiment.

b3) When the relative region position is the protection mesh region being at the edge of the target protection region, the morphing moving information corresponding to the image content in the protection mesh region is determined according to a protection strength value of the protection mesh region.

It can be known that in this case, it can be considered that the position of the protection mesh region is within the range of the edge region of the target protection region. Although the image content of the target protection region is an object not involved in morphing and moving, in consideration of the image content in the target image needing to achieve the natural and realistic effects of morphing and moving adjustment, a certain morphing amplitude may be given to the protection mesh region within the edge range as the morphing moving information of the protection mesh region in this embodiment.

The morphing amplitude may be determined according to the protection strength value corresponding to the protection mesh region, and the protection strength value may be construed as the protection intensity of protecting the mesh region in the target protection region against morphing. The range of the protection strength value may be from 0 to 1. Assuming that the value 0 is used as the minimum protection strength, it can be considered that the protection strength value of the mesh region closer to the edge of the protection region is closer to 0. On the contrary, the protection strength value of the mesh region farther away from the edge of the protection region is closer to 1.

In this embodiment, the protection strength value of each mesh region in the target protection region may be predetermined. For the morphing protection region in the image morphing region, the corresponding protection strength value for each protection mesh region in the morphing protection region can be obtained by looking up in the table. The morphing moving information of the image content in each protection mesh region can be then determined in combination with the morphing moving value given by the participant for the image morphing region.

At S212, the image content in the morphing protection region is morphed and moved according to the morphing moving information.

In this embodiment, for each protection mesh region in the morphing protection region, the corresponding morphing moving information can be obtained. By this step, with the morphing moving information of each protection mesh region, the image content in the protection mesh region can be controlled to move according to the determined morphing moving information.

It needs to be noted that when the target image is represented with meshed data, for each mesh region, in addition to that the horizontal and vertical coordinates of the vertexes of the mesh region are recorded using a set of coordinate data, the color information of the mesh region is recorded using another set of coordinate data (vertex sampled horizontal and vertical coordinates). The process of morphing and moving the image content in the protection mesh region according to the morphing moving information is equivalent to moving the coordinate positions of the horizontal and vertical coordinates of the vertexes of the protection mesh region according to the morphing moving information. After moving, the original color information in the protection mesh region can be obtained with the vertex sampled horizontal and vertical coordinates, and association between the original color information and the adjusted vertex sampled horizontal and vertical coordinates is established by moving and adjusting the vertex sampled horizontal and vertical coordinates. Thus, the protection mesh region is allowed to still have the original color information after being morphed and moved.

In order to better understand the image processing method provided by this embodiment, Fig. 2a is a diagram showing an effect after an image morphing region is morphed by the image processing method provided by the embodiment. As shown in Fig. 2a, it can be regarded as a processing result of further processing the target image in Fig. 1a. The target image 11 in Fig. 2a also includes a water cup 111 and a background image region (a region other than the water cup). Assuming that the background image region in the target image 11 is determined as the target protection region, it can be known that a region close to the water cup 111 in the target protection region is the edge region of the target protection region.

As described above, after the image region within the rectangular box is determined as the image morphing region 13 in the target image 11, it can be determined that the image morphing region 13 includes the image content of the water cup 111 and the morphing protection region other than the water cup 111 within the target protection region. As shown in Fig. 2a, in the process of performing image morphing processing on the image morphing region, apart from the image content of the water cup 111 is morphed and moved, the morphing protection region falling into the target protection region is also morphed at a different morphing strength. It can be seen that the morphing amplitude of the morphing protection region closer to the water cup 111 is greater.

Different from only morphing and moving the image content of the water cup 111 in the image morphing region 13, this technical solution also takes into consideration that the image content in the morphing protection region is morphed and moved according to the determined morphing moving information. Thus, the boundary between morphing and non-morphing of the image content of the water cup 111 in the image morphing region 13 and the content image in the morphing protection region is better weakened; natural transition of the morphing degree of the image content in the image morphing region 13 is better achieved; and the beautified and morphed image content in the image morphing region 13 is rendered more realistic.

The above technical solutions of the embodiments of the present disclosure provide the specific implementation of image processing. Firstly, the specific implementation logic of the image morphing region is given, and the specific implementation logic of the morphing protection region is also given, and the specific implementation logic of the morphing moving information is given. With the technical solution of this embodiment, the morphing and moving of the image content protected against morphing may be associated with the position information of the mesh region of the image content such that the mesh region at the edge of the protection region is also morphed and moved at a small morphing amplitude. The morphing boundary between the image contents in the non-protection region and the protection region in the image region to be morphed can be better weakened; the natural transition between morphing degrees of the image contents in the non-protection region and the protection region can be better achieved; the beautified and morphed image contents in the image region to be morphed can be rendered more realistic; effective beautifying and morphing of the image contents can be realized; and the user experience in image beautifying and morphing applications can be enhanced.

As a fourth optional embodiment of the embodiments of the present disclosure, on the basis of the above embodiments, as an optimization, the following step is further included: determining a protection strength value for the image content in the target protection region corresponding to the target image for determining the morphing moving information corresponding to the image content in the morphing protection region.

In this embodiment, after the target protection region is determined from the target image, the protection strength value can be further determined for the image content in the target protection region by the optional embodiment. The protection strength value may be construed as a protection intensity of protecting the image content against morphing and avoiding the image content from being morphed when the image content in the target protection region is involved in morphing and moving processing.

It can be known that the protection strength value is related to the position of the image content in the target protection region. The closer to the central range of the target protection region, the greater the protection intensity recorded by the protection strength value associated with the image content. The closer to the edge range of the target protection region, the lower the protection intensity recorded by the protection strength value associated with the image content.

On the basis of the above third optional embodiment, as an implementation, the determination steps of the protection strength value can be specifically as follows:
a4) The protection region mesh data of the target protection region is extracted to form a mask image having a same size as the target image.

In this embodiment, an initial mask image having a same size as the target image may be established in advance, and the color information of the initial mask image may be set to pure white, or may be set to any preset color. After the protection region mesh data of the target protection region is determined with the above technical solution, the protection region mesh data can be extracted by this step, and the image data information included in the protection region mesh data can be aligned to the initial mask image. The color information of the image content in the target protection region is used to replace the color of the content at the same position on the initial mask image. Thus, the mask image including the target protection region can be obtained.

The protection mesh region is a mesh region in the target protection region.

b4) Binary conversion is performed on the mask image to obtain a binary image of the mask image.

In the mask image obtained by the above step, the image content of the target protection region is presented, and the remaining image region is still the initial color information. Binarization processing can be performed on the mask image by this step. Specifically, the color information of the image content in the target protection region can be converted to pixel value 0 corresponding to pure black in the binarization scenario. At this time, the color information in other image regions may be pixel value 1 corresponding to pure white in the binarization scenario. Thus, the binary image of the mask image is formed.

As described above, in another binarization implementation, the color information of the image content in the target protection region can be converted to pixel value 1 corresponding to pure white in the binarization scenario, while the color information in other image regions can be converted to pixel value 0 corresponding to pure black in the binarization scenario, and the binary image of the mask image can also be formed. This embodiment has no specific limitation on the color information in the target protection region and other image regions as long as the target protection region can be differentiated.

It needs to be noted that the image data information of the formed binary image can also be recorded in the meshing form.

c4) Feathering processing is performed on the target protection region in the binary image to obtain a binary feathered image.

In this embodiment, in order to avoid that the target image is simply distinguished between a morphing protection state and a non-morphing protection state by the target protection region, leading to an abrupt state change at the edge of the target protection region, feathering processing can be performed on the binary image in this embodiment.

In this embodiment, the target protection region in the binary image can be regarded as a feathering object, and the image data information of the binary image is also recorded in the meshing form. A plurality of mesh regions can be included in the target protection region. Each mesh region also has two sets of mesh coordinates correspondingly, wherein one set is horizontal and vertical coordinates of mesh vertexes, and the other set is horizontal and vertical sampling coordinates of vertexes representing the color information of the mesh region.

The feathering processing on the target protection region in this step may be converted to feathering processing on each mesh region in the target protection region. Feathering may refer to blurring an inside-outside joining portion of the target protection region. Thus, an effect of changing gradually between the target protection region and the edges of other image regions can be achieved, and the effect of natural joining can be achieved. The feathering processing can be realized by changing a distance using Gaussian blur, signed distance field, and the like in this embodiment.

d4) An image gray value of each mesh region in the target protection region is extracted from the binary feathered image, and a protection strength value for an image content in the corresponding mesh region is determined.

It needs to be noted that in the binary feathered image obtained by feathering processing, color gradual changing processing is performed on the joined mesh region of the target protection region and other image regions, and finally, the pixel value corresponding to the joined mesh region is not absolute 0 or 1, and instead, a gray value between 0 and 1.

The pixel value of each mesh region in the binary feathered image can be obtained in this step, and the pixel value can be denoted as the image gray value. In an implementation, a predefined transformation function can be used. The image gray value of the image content in each mesh region is input to the transformation function, and then the protection strength value output by the function is obtained.

The above technical solution of the optional embodiment provides the description of determining the protection strength value in the target protection region. Specifically, mask extraction, binarization processing and feathering processing of the target protection region are adopted. The problem of abrupt change of the morphing stage at the edge of the target protection region is avoided in this way. The protection strength value for each image content in the determined target protection region may be stored as the predetermined protection strength information. In practical application of image processing, gradual changing of the morphing moving strength can be realized by calling the protection strength information of the corresponding region. Thus, the image morphing processing can be presented in a more natural and realistic state.

As a fifth optional embodiment of the embodiments of the present disclosure, on the basis of the above embodiments, as an optimization, the following steps may be further included: when detecting that the image morphing region in the target image has been morphed and moved, showing the target image that has been morphed and moved, and recording the corresponding meshed data.

In the fifth optional embodiment, after the implementation logic of morphing and moving is performed on the image morphing region, a showing logic for the morphed and moved target image is added as a further optimization. Meanwhile, the meshed data of the target image after morphing and moving can be recorded in real time. The target image is recorded using the meshed data. Effective recording of the target image data information can be realized by only occupying a few storage spaces. Thus, when a back-off operation of the image morphing operation is received, back-off of image morphing can be realized flexibly and rapidly based on the meshed data recorded after image morphing each time.

The technical solution of the above fifth optional embodiment realizes showing of the visual effect of the target image after morphing and moving, and also realizes real-time recording of the meshed data corresponding to the target image. In this optional technical solution, the target image presents the morphing effects of the image contents at different positions in the image morphing region at different morphing degrees. A beautified and morphed image can be rendered more natural and realistic. Flexible and rapid back-off of beautifying edition in image beautifying edition is also realized with the image data recorded in the form of the meshed data. The user experience of the image beautifying and morphing application is better enhanced.

Fig. 3 is a structural schematic diagram of an image processing apparatus provided by an embodiment of the present disclosure. As shown in Fig. 3, the image processing apparatus includes a region determination module 31, an information determination module 32, and a protection region morphing module 33. The region determination module 31 is configured to, in response to a morphing triggering operation for a target image, determine an image morphing region from the target image. The information determination module 32 is configured to, in response to determining that the image morphing region includes a morphing protection region, determine morphing moving information corresponding to an image content in the morphing protection region according to position information of the morphing protection region. The protection region morphing module 33 is configured to morph and move the image content in the morphing protection region according to the morphing moving information.

The method logic performed by the image processing apparatus provided by the embodiment of the present disclosure is not intended to beautify, by morphing and moving, a content of a non-protection region in an image region to be morphed, and the technical solution, when the selected image morphing region includes the morphing protection region, also takes into consideration that the image content in the morphing protection region is morphed and moved according to the determined morphing moving information. The above-mentioned implementation of the technical solution can better weaken a morphing boundary between the image contents in the non-protection region and the protection region in the image region to be morphed, better achieve a natural transition between morphing degrees of the image contents in the non-protection region and the protection region, render the beautified and morphed image contents in the image region to be morphed more realistic, realize effective beautifying and morphing of the image contents, and enhance the user experience in image beautifying and morphing applications.

Further, the image processing apparatus further includes a non-protection region morphing module. The non-protection region morphing module is configured to, for a non-morphing protection region in the image morphing region, morph and move an image content in the non-morphing protection region with a morphing moving value determined according to the morphing triggering operation, wherein the non-morphing protection region is a region other than the morphing protection region in the image morphing region.

Further, the image processing apparatus further includes a protection region determination module. The protection region determination module is configured to, in response to an acquiring operation for a protection region of the target image, determine a target protection region from the target image, wherein the target protection region is used for determining the morphing protection region.

Further, the image processing apparatus may further include: a presentation module configured to present an image editing interface, wherein the target image is shown in a first region of the image editing interface; a first triggering module configured to show a protection region selecting control in a second region of the image editing interface, and generate the acquiring operation for the protection region to determine the target protection region in the target image after triggering the protection region selecting control; and a second triggering module configured to show a morphing operation triggering control in a third region of the image editing interface, and receive the morphing triggering operation performed on the target image in the first region after triggering the morphing operation triggering control.

Further, the protection region determination module is specifically configured to: determine region position information associated with the acquiring operation for the protection region in response to the acquiring operation for the protection region of the target image; determine protection region mesh data according to the region position information in combination with meshed data of the target image; and obtain the target protection region recorded using the protection region mesh data from the target image.

Further, the region determination module 31 is specifically configured to: determine morphing region position information associated with the morphing triggering operation in response to the morphing triggering operation for the target image; determine morphing region mesh data according to the morphing region position information in combination with the meshed data of the target image; and obtain the image morphing region recorded using the morphing region mesh data from the target image.

Further, the image processing apparatus further includes a morphing region determination module configured to determine that the image morphing region includes the morphing protection region belonging to the target protection region. The morphing region determination module may be specifically configured to: acquire the protection region mesh data of the predetermined target protection region; divide the image morphing region into at least one morphing mesh region based on the morphing region mesh data of the image morphing region; for each morphing mesh region, determine whether morphing mesh coordinates of the morphing mesh region fall into the protection region mesh data; if yes, denote the morphing mesh region as a protection mesh region belonging to the target protection region; and obtain the morphing protection region in combination with the protection mesh region.

Further, the information determination module 32 may specifically include: an obtaining unit configured to obtain each protection mesh region constituting the morphing protection region, and obtain protection mesh coordinates of each protection mesh region; a first determination unit configured to, for the protection mesh region, determine a relative region position of the protection mesh region to the target protection region according to the corresponding protection mesh coordinates; and a second determination unit configured to determine morphing moving information corresponding to an image content in the protection mesh region according to the relative region position.

Further, the first determination unit may be specifically configured to: determine an edge mesh region of the target protection region, and acquire edge mesh coordinates of the edge mesh region; determine a relative distance of the protection mesh region from the edge mesh region according to the edge mesh coordinates and the protection mesh coordinates; if the relative distance is greater than a set edge threshold, take the protection mesh region being within the target protection region as relative region position; otherwise, take the protection mesh region being at an edge of the target protection region as relative region position.

Further, the second determination unit may be specifically configured to: determine the morphing moving information corresponding to the image content in the protection mesh region as unchanged in response to the relative region position being the protection mesh region being within the target protection region; and determine the morphing moving information corresponding to the image content in the protection mesh region according to a protection strength value of the protection mesh region in response to the relative region position being the protection mesh region being at the edge of the target protection region,.

Further, the image processing apparatus further includes a strength information determination module. The strength information determination module may be configured to: extract the protection region mesh data of the target protection region to form a mask image having a same size as the target image; perform binary conversion on the mask image to obtain a binary image of the mask image; perform feathering processing on the target protection region in the binary image to obtain a binary feathered image; and extract an image gray value of each mesh region in the target protection region from the binary feathered image, and determine a protection strength value for an image content in the corresponding mesh region.

Further, the image processing apparatus further includes an image showing module. The image showing module is configured to, when detecting that the image morphing region in target image has been morphed and moved, show the target image that has been morphed and moved, and record the corresponding meshed data.

The image processing apparatus provided in the embodiment of the present disclosure may perform the image processing method provided in any embodiment of the present disclosure and has corresponding functional modules for performing the method and corresponding beneficial effects.

It needs to be noted that the units and modules included in the apparatus described above are only divided according to functional logic, but are not limited to the above division, as long as corresponding functions can be implemented. In addition, names of the functional units are merely for the purpose of distinguishing from each other, but are not intended to limit the protection scope of the embodiments of the present disclosure.

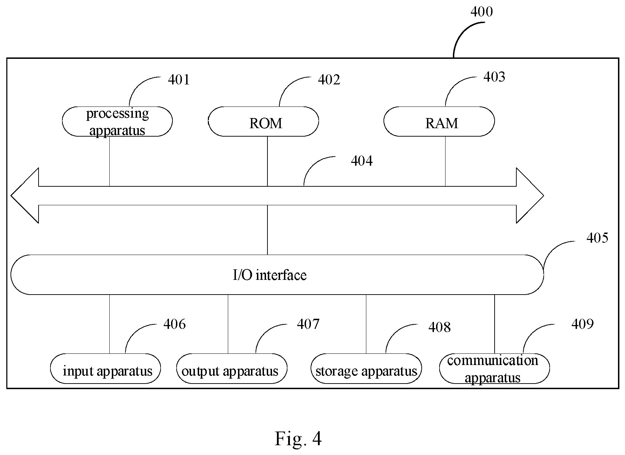

Fig. 4 is a structural schematic diagram of an electronic device provided by an embodiment of the present disclosure. Fig. 4 is specifically referred below, and it shows the structure schematic diagram suitable for achieving the electronic device 400 (e.g. the terminal device or the server as shown in Fig. 4) in the embodiment of the present disclosure. The terminal device in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 4 is only an example and should not impose any limitations on the functions and use scopes of the embodiments of the present disclosure.

As shown in Fig. 4, the electronic device 400 may include a processing apparatus (such as a central processing unit, and a graphics processor) 401, it may execute various appropriate actions and processes according to a program stored in a read-only memory (ROM) 402 or a program loaded from a storage apparatus 408 to a random access memory (RAM) 403. In RAM 403, various programs and data required for operations of the electronic device 400 are also stored. The processing apparatus 401, ROM 402, and RAM 403 are connected to each other by a bus 404. An input/output (I/O) interface 405 is also connected to the bus 404.

Typically, the following apparatuses may be connected to the I/O interface 405: an input apparatus 406 such as a touch screen, a touchpad, a keyboard, a mouse, a camera, a microphone, an accelerometer, and a gyroscope; an output apparatus 407 such as a liquid crystal display (LCD), a loudspeaker, and a vibrator; a storage apparatus 408 such as a magnetic tape, and a hard disk drive; and a communication apparatus 409. The communication apparatus 409 may allow the electronic device 400 to wireless-communicate or wire-communicate with other devices so as to exchange data. Although Fig. 4 shows the electronic device 400 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 409, or installed from the storage apparatus 408, or installed from ROM 402. When the computer program is executed by the processing apparatus 401, the above functions defined in the image processing method in the embodiments of the present disclosure are executed.

Names of messages or information exchanged between a plurality of apparatuses in embodiments of the present disclosure are only used for the purpose of description and not meant to limit the scope of these messages or information.

The electronic device provided by the embodiments of the present disclosure and the image processing method provided by the aforementioned embodiments are of the same inventive concept. Technical details not extensively described in this embodiment can be found in the aforementioned embodiments, and this embodiment possesses the same beneficial effects as the aforementioned embodiments.

The embodiments of the present disclosure provide a computer storage medium that stores computer programs. When executed by a processor, these programs implement the image processing method provided by the aforementioned embodiments.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above-mentioned computer-readable storage medium, storing one or more programs which, when executed by an electronic device, cause(s) the electronic device to: determine an image morphing region from the target image in response to a morphing triggering operation for a target image; determine morphing moving information corresponding to an image content in the morphing protection region according to position information of the morphing protection region in response to determining that the image morphing region comprises a morphing protection region; and morph and movie the image content in the morphing protection region according to the morphing moving information.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases. For example, a first obtaining unit may also be described as "a unit for obtaining at least two Internet Protocol addresses".

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to one or more embodiments, Example 1 provides an image processing method, comprising: in response to a morphing triggering operation for a target image, determining an image morphing region from the target image; in response to determining that the image morphing region comprises a morphing protection region, determining morphing moving information corresponding to an image content in the morphing protection region according to position information of the morphing protection region; and morphing and moving the image content in the morphing protection region according to the morphing moving information.

According to one or more embodiments, Example 2 provides an image processing method, further comprising: for a non-morphing protection region in the image morphing region, morphing and moving an image content in the non-morphing protection region with a morphing moving value determined according to the morphing triggering operation, wherein the non-morphing protection region is a region other than the morphing protection region in the image morphing region.

According to one or more embodiments, Example 3 provides an image processing method, further comprising: in response to an acquiring operation for a protection region of the target image, determining a target protection region from the target image, wherein the target protection region is used for determining the morphing protection region.

According to one or more embodiments, Example 4 provides an image processing method, further comprising: presenting an image editing interface, wherein the target image is shown in a first region of the image editing interface; showing a protection region selecting control in a second region of the image editing interface, and generating the acquiring operation for the protection region to determine the target protection region in the target image after triggering the protection region selecting control; and showing a morphing operation triggering control in a third region of the image editing interface, and receiving the morphing triggering operation performed on the target image in the first region after triggering the morphing operation triggering control.

According to one or more embodiments, Example 5 provides an image processing method, wherein the determining a target protection region from the target image optionally comprises: determining region position information associated with the acquiring operation for the protection region; determining protection region mesh data according to the region position information in combination with meshed data of the target image; and obtaining the target protection region recorded using the protection region mesh data from the target image.

According to one or more embodiments, Example 6 provides an image processing method, wherein the determining an image morphing region from the target image optionally comprises: determining morphing region position information associated with the morphing triggering operation; determining morphing region mesh data according to the morphing region position information in combination with the meshed data of the target image; and obtaining the image morphing region recorded using the morphing region mesh data from the target image.

According to one or more embodiments, Example 7 provides an image processing method, wherein the determining that the image morphing region comprises a morphing protection region optionally comprises: acquiring a protection region mesh data of a predetermined target protection region; dividing the image morphing region into at least one morphing mesh region based on a morphing region mesh data of the image morphing region; for each morphing mesh region, determining whether morphing mesh coordinates of the morphing mesh region fall into the protection region mesh data; if yes, denoting the morphing mesh region as a protection mesh region belonging to the target protection region; and obtaining the morphing protection region in combination with the protection mesh region.

According to one or more embodiments, Example 9 provides an image processing method, wherein the determining morphing moving information corresponding to an image content in the morphing protection region according to position information of the morphing protection region optionally comprises: obtaining a protection mesh region constituting the morphing protection region, and obtaining protection mesh coordinates of the protection mesh region; for the protection mesh region, determining a relative region position of the protection mesh region to the target protection region according to the corresponding protection mesh coordinates; and determining morphing moving information corresponding to an image content in the protection mesh region according to the relative region position.

According to one or more embodiments, Example 9 provides an image processing method, wherein the determining a relative region position of the protection mesh region to the target protection region according to the corresponding protection mesh coordinates optionally comprises: determining an edge mesh region of the target protection region, and acquiring edge mesh coordinates of the edge mesh region; determining a relative distance of the protection mesh region from the edge mesh region according to the edge mesh coordinates and the protection mesh coordinates; if the relative distance is greater than a set edge threshold, taking the protection mesh region being within the target protection region as the relative region position; otherwise, taking the protection mesh region being at an edge of the target protection region as the relative region position.

According to one or more embodiments, Example 10 provides an image processing method, wherein the determining morphing moving information corresponding to an image content in the protection mesh region according to the relative region position optionally comprises: determining the morphing moving information corresponding to the image content in the protection mesh region as unchanged in response to the relative region position being the protection mesh region being within the target protection region; and determining the morphing moving information corresponding to the image content in the protection mesh region according to a protection strength value of the protection mesh region in response to the relative region position being the protection mesh region being at the edge of the target protection region.

According to one or more embodiments, Example 11 provides an image processing method, wherein determining the protection strength value optionally comprises: extracting the protection region mesh data of the target protection region to form a mask image having a same size as the target image; performing binary conversion on the mask image to obtain a binary image of the mask image; performing feathering processing on the target protection region in the binary image to obtain a binary feathered image; and extracting an image gray value of each mesh region in the target protection region from the binary feathered image, and determining a protection strength value for an image content in the corresponding mesh region, wherein the protection mesh region is a mesh region in the target protection region.

According to one or more embodiments, Example 12 provides an image processing method, further comprising: in response to detecting that the image morphing region in the target image has been morphed and moved, showing the target image that has been morphed and moved, and recording the corresponding meshed data.

According to one or more embodiments, Example 13 provides an image processing apparatus, comprising: a region determination module configured to, in response to a morphing triggering operation for a target image, determine an image morphing region from the target image; an information determination module configured to, in response to determining that the image morphing region comprises a morphing protection region, determine morphing moving information corresponding to an image content in the morphing protection region according to position information of the morphing protection region; and a protection region morphing module configured to morph and move the image content in the morphing protection region according to the morphing moving information.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An image processing method, comprising:
in response to a morphing triggering operation for a target image, determining an image morphing region from the target image;
in response to determining that the image morphing region comprises a morphing protection region, determining morphing moving information corresponding to an image content in the morphing protection region according to position information of the morphing protection region; and
morphing and moving the image content in the morphing protection region according to the morphing moving information.

2. The image processing method according to claim 1, further comprising:
for a non-morphing protection region in the image morphing region, morphing and moving an image content in the non-morphing protection region with a morphing moving value determined according to the morphing triggering operation,
wherein the non-morphing protection region is a region other than the morphing protection region in the image morphing region.

3. The image processing method according to claim 1 or 2, further comprising:
in response to an acquiring operation for a protection region of the target image, determining a target protection region from the target image, wherein the target protection region is used for determining the morphing protection region.

4. The image processing method according to claim 3, further comprising:
presenting an image editing interface, wherein the target image is shown in a first region of the image editing interface;
showing a protection region selecting control in a second region of the image editing interface, and generating the acquiring operation for the protection region to determine the target protection region in the target image after triggering the protection region selecting control; and
showing a morphing operation triggering control in a third region of the image editing interface, and receiving the morphing triggering operation performed on the target image in the first region after triggering the morphing operation triggering control.

5. The image processing method according to claim 3 or 4, wherein the determining a target protection region from the target image comprises:
determining region position information associated with the acquiring operation for the protection region;
determining protection region mesh data according to the region position information in combination with meshed data of the target image; and
obtaining the target protection region recorded using the protection region mesh data from the target image.

6. The image processing method according to claim **1,** wherein the determining an image morphing region from the target image comprises:
determining morphing region position information associated with the morphing triggering operation;
determining morphing region mesh data according to the morphing region position information in combination with the meshed data of the target image; and
obtaining the image morphing region recorded using the morphing region mesh data from the target image.

7. The image processing method according to any one of claims 1 to 6, wherein the determining that the image morphing region comprises a morphing protection region comprises:
acquiring a protection region mesh data of a predetermined target protection region;
dividing the image morphing region into at least one morphing mesh region based on a morphing region mesh data of the image morphing region;
for each morphing mesh region, determining whether morphing mesh coordinates of the morphing mesh region fall into the protection region mesh data;
if yes, denoting the morphing mesh region as a protection mesh region belonging to the target protection region; and
obtaining the morphing protection region in combination with the protection mesh region.

8. The image processing method according to any one of claims 1 to 7, wherein the determining morphing moving information corresponding to an image content in the morphing protection region according to position information of the morphing protection region comprises:
obtaining a protection mesh region constituting the morphing protection region, and obtaining protection mesh coordinates of the protection mesh region;
for the protection mesh region, determining a relative region position of the protection mesh region to the target protection region according to the corresponding protection mesh coordinates; and
determining morphing moving information corresponding to an image content in the protection mesh region according to the relative region position.

9. The image processing method according to claim 8, wherein the determining a relative region position of the protection mesh region to the target protection region according to the corresponding protection mesh coordinates comprises:
determining an edge mesh region of the target protection region, and acquiring edge mesh coordinates of the edge mesh region;
determining a relative distance of the protection mesh region from the edge mesh region according to the edge mesh coordinates and the protection mesh coordinates;
if the relative distance is greater than a set edge threshold, taking the protection mesh region being within the target protection region as the relative region position; otherwise,
taking the protection mesh region being at an edge of the target protection region as the relative region position.

10. The image processing method according to claim 8 or 9, wherein the determining morphing moving information corresponding to an image content in the protection mesh region according to the relative region position comprises:
determining the morphing moving information corresponding to the image content in the protection mesh region as unchanged in response to the relative region position being the protection mesh region being within the target protection region; and
determining the morphing moving information corresponding to the image content in the protection mesh region according to a protection strength value of the protection mesh region in response to the relative region position being the protection mesh region being at the edge of the target protection region.

11. The image processing method according to claim 10, wherein determining the protection strength value comprises:
extracting the protection region mesh data of the target protection region to form a mask image having a same size as the target image;
performing binary conversion on the mask image to obtain a binary image of the mask image;
performing feathering processing on the target protection region in the binary image to obtain a binary feathered image; and
extracting an image gray value of each mesh region in the target protection region from the binary feathered image, and determining a protection strength value for an image content in the corresponding mesh region,
wherein the protection mesh region is a mesh region in the target protection region.

12. The image processing method according to any one of claims 1 to **11,** further comprising:
in response to detecting that the image morphing region in the target image has been morphed and moved, showing the target image that has been morphed and moved, and recording the corresponding meshed data.

13. An image processing apparatus, comprising:
a region determination module configured to, in response to a morphing triggering operation for a target image, determine an image morphing region from the target image;
an information determination module configured to, in response to determining that the image morphing region comprises a morphing protection region, determine morphing moving information corresponding to an image content in the morphing protection region according to position information of the morphing protection region; and
a protection region morphing module configured to morph and move the image content in the morphing protection region according to the morphing moving information.

14. An electronic device, comprising:
one or more processors;
a storage apparatus configured to store one or more programs,
wherein the one or more programs, when executed by the one or more processors, cause the one or more processors to implement the image processing method according to any one of claims 1 to 12.

15. A computer-readable storage medium, storing a computer program which, when executed by a processor, implements the image processing method according to any one of claims 1 to 12.

16. A computer program product, comprising a computer program which, when executed by a processor, implements the image processing method according to any one of claims 1 to 12.
